# EUROPEAN PATENT APPLICATION

(11) **EP 2 626 968 A2**
(43) Date of publication of application: **14.08.2013**
(21) Application number: 13153576.7
(22) Date of filing: 01.02.2013
(51) Int. Cl.: H02J 3/38

(54) **Solar inverter system and control method thereof**

(30) Priority: 08.02.2012 TW 101104011
(71) Applicant: Darfon Electronics Corp., Taoyuan 33341 (TW)
(72) Inventor: Chiang, Chang-Chia, 33341 Taoyuan (TW); Hsiang, Li, 33341 Taoyuan (TW); Ku, Hsiao-Chih, 33341 Taoyuan (TW)
(74) Representative: Becker Kurig Straus

(57) **Abstract**

A solar inverter system (100, 200) includes a first inverter (102), a second inverter (104), and a controller (106). The first inverter (102) has a first input terminal, and a first output terminal. The first input terminal is coupled to a solar panel (108). The second inverter (104) has a second input terminal, and a second output terminal. The second input terminal is coupled to the solar panel (108). The first output terminal and the second output terminal are parallel with a utility grid (112). The controller (106) is coupled to the first inverter (102) and the second inverter (104) for controlling the first inverter (102) and the second inverter (104) to output total output power in turn, or controlling the first inverter (102) and the second inverter (104) to output the total output power simultaneously.

## Description

### Field of the Invention

The present invention relates to a solar inverter system and a control method thereof according to the pre-characterizing clauses of claims 1 and 8.

### Background of the Invention

Generally speaking, when output power of an inverter is lower (e.g. output power of an inverter is lower than 30% maximum output power of the inverter), the efficiency and harmonic distortion of a solar inverter system including the inverter are worse. In a solar inverter system with multi-inverters, because total output power of the solar inverter system is evenly distributed to each inverter (therefore, output power of each inverter is the same), output power of each inverter is much lower, resulting in the efficiency and harmonic distortion of the solar inverter system with multi-inverters being much worse. Those skilled in the art can refer to United States Patent No. 7,893,346 and United States Patent No. 8,013,472.

Therefore, in the solar inverter system with multi-inverters, the efficiency and the harmonic distortion of the solar inverter system with multi-inverters are usually worse than a solar inverter system with an inverter because each inverter of the solar inverter system with multi-inverters outputs the same power.

### Summary of the Invention

This in mind, the present invention aims at providing a solar inverter system and a control method thereof that can utilize a controller to control output power of inverters included in the solar inverter system to increase efficiency of the solar inverter system, decrease harmonic distortion of the solar inverter system, and extend service life of the inverters included in the solar inverter system.

This is achieved by a solar inverter system and a control method thereof according to claims 1 and 8. The dependent claims pertain to corresponding further developments and improvements.

As will be seen more clearly from the detailed description following below, the claimed solar inverter system includes a first inverter, a second inverter, and a controller. The first inverter has a first input terminal, and a first output terminal. The first input terminal is coupled to a solar panel. The second inverter has a second input terminal, and a second output terminal. The second input terminal is coupled to the solar panel. The first output terminal and the second output terminal are parallel with a utility grid. The controller is coupled to the first inverter and the second inverter for controlling the first inverter and the second inverter to output total output power in turn, or controlling the first inverter and the second inverter to output the total output power simultaneously.

### Brief Description of the Drawings

In the following, the invention is further illustrated by way of example, taking reference to the accompanying drawings thereof:
FIG. 1 is a diagram illustrating a solar inverter system according to an embodiment,
FIG. 2 is a diagram illustrating a solar inverter system according to another embodiment, and
FIG. 3 is a flowchart illustrating a control method of a solar inverter system according to another embodiment.

### Detailed Description

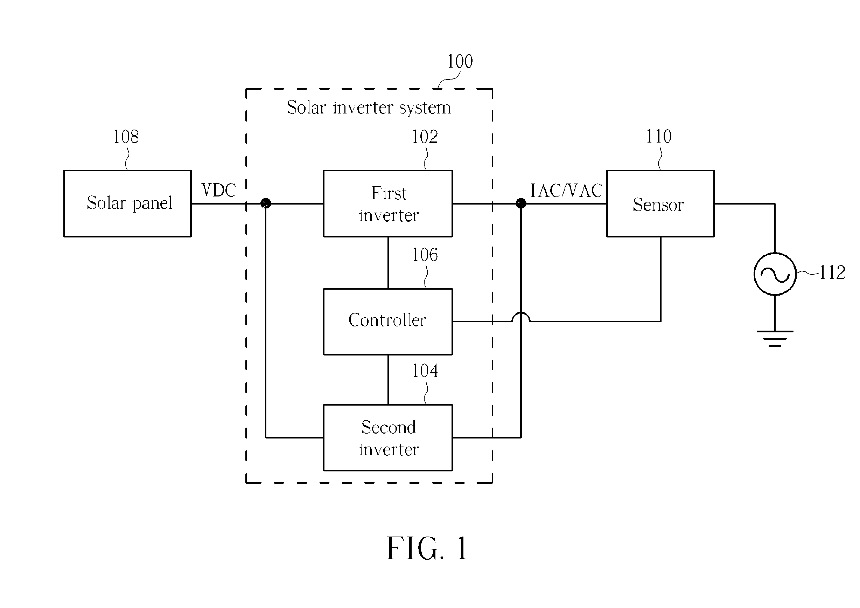

Please refer to FIG. 1. FIG. 1 is a diagram illustrating a solar inverter system 100 according to an embodiment. The solar inverter system 100 includes a first inverter 102, a second inverter 104, and a controller 106, where the first inverter 102 is the same as the second inverter 104. In another embodiment of the present invention, the first inverter 102 can also be different from the second inverter 104. But, the present invention is not limited to the solar inverter system 100 only including the first inverter 102 and the second inverter 104. Therefore, the solar inverter system 100 can include at least two inverters. The first inverter 102 has a first input terminal and a first output terminal, where the first input terminal is coupled to a solar panel 108; the second inverter 104 has a second input terminal and a second output terminal, where the second input terminal is coupled to the solar panel 108. As shown in FIG. 1, the first output terminal of the first inverter 102 and the second output terminal of the second inverter 104 are in parallel with a utility grid 112 through a sensor 110, where the sensor 110 is used for sensing an alternating current (AC) current IAC and an AC voltage VAC generated by the first inverter 102 and the second inverter 104 converting a direct current voltage VDC of the solar panel 108. In addition, the utility grid 112 has an AC frequency (e.g. 50Hz or 60Hz) and an AC voltage (e.g. 110V or 220V). The controller 106 is coupled to the first inverter 102, the second inverter 104, and the sensor 110 for calculating total output power of the solar inverter system 100 according to the AC current IAC and the AC voltage VAC, and optionally controlling the first inverter 102 and the second inverter 104 to output the total output power of the solar inverter system 100 in turn, or controlling the first inverter 102 and the second inverter 104 to output the total output power of the solar inverter system 100 simultaneously.

When the total output power of the solar inverter system 100 is less than a threshold value (maximum output power of the first inverter 102), the controller 106 controls the first inverter 102 and the second inverter 104 to output the total output power of the solar inverter system 100 in turn; when the total output power of the solar inverter system 100 is greater than the threshold value, the controller 106 controls the first inverter 102 and the second inverter 104 to output the total output power of the solar inverter system 100 simultaneously, and the first inverter 102 and the second inverter 104 output the maximum output power of the first inverter 102 in turn. Therefore, when the total output power of the solar inverter system 100 is greater than the threshold value and output power of the first inverter 102 is the maximum output power of the first inverter 102, output power of the second inverter 104 is the total output power of the solar inverter system 100 minus the maximum output power of the first inverter 102; and when the total output power of the solar inverter system 100 is greater than the threshold value and the output power of the second inverter 104 is the maximum output power of the first inverter 102, the output power of the first inverter 102 is the total output power of the solar inverter system 100 minus the maximum output power of the first inverter 102.

For example, the maximum output power of the first inverter 102 is 120W. When the total output power of the solar inverter system 100 is 110W, the controller 106 controls the first inverter 102 and the second inverter 104 to output the total output power (110W) of the solar inverter system 100 in turn because the total output power (110W) of the solar inverter system 100 is less than the threshold value (120W). When the total output power of the solar inverter system 100 is 130W, because the total output power (130W) of the solar inverter system 100 is greater than the threshold value (120W), the controller 106 controls the first inverter 102 and the second inverter 104 to output the total output power (130W) of the solar inverter system 100 simultaneously, and the first inverter 102 and the second inverter 104 output the maximum output power (120W) of the first inverter 102 in turn. Meanwhile, when the total output power (130W) of the solar inverter system 100 is greater than the threshold value (120W) and the output power of the first inverter 102 is the maximum output power (120W) of the first inverter 102, the output power of the second inverter 104 is the total output power (130W) of the solar inverter system 100 minus the maximum output power (120W) of the first inverter 102. Therefore, the output power of the second inverter 104 is 10W. When the total output power (130W) of the solar inverter system 100 is greater than the threshold value (120W) and the output power of the second inverter 104 is the maximum output power (120W) of the first inverter 102, the output power of the first inverter 102 is the total output power (130W) of the solar inverter system 100 minus the maximum output power (120W) of the first inverter 102. Therefore, the output power of the first inverter 102 is 10W.

In addition, in another embodiment of the present invention, the solar inverter system 100 further includes the sensor 110.

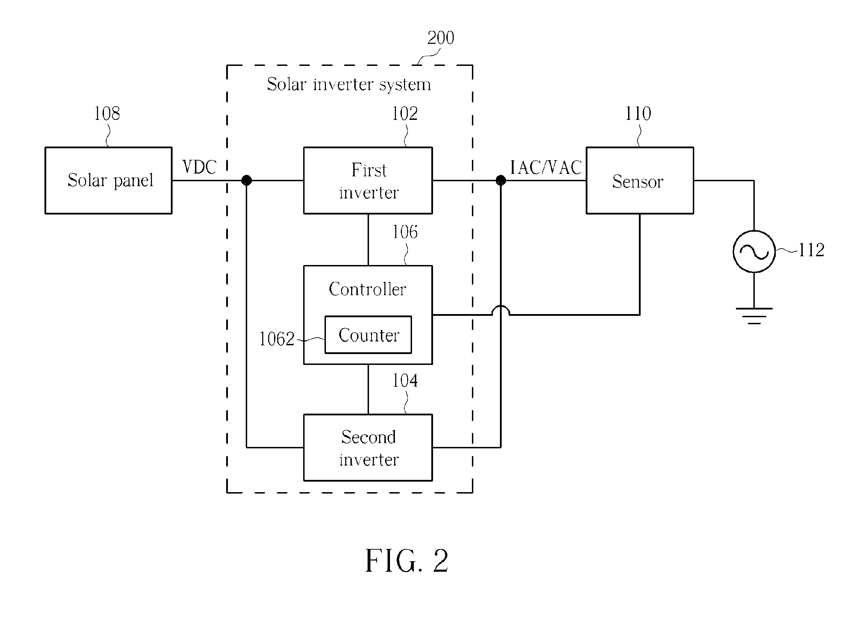

Please refer to FIG. 2. FIG. 2 is a diagram illustrating a solar inverter system 200 according to another embodiment. A difference between the solar inverter system 200 and the solar inverter system 100 is that the controller 106 includes a counter 1062, where the counter 1062 is used for counting number of total output power of the solar inverter system 200 greater than the threshold value (120W) within a predetermined time. When the number of the total output power of the solar inverter system 200 greater than the threshold value (120W) within the predetermined time is less than N (N is a positive integer), the controller 106 controls the first inverter 102 and the second inverter 104 to output the total output power of the solar inverter system 200 in turn; when the number of total output power of the solar inverter system 200 greater than the threshold value (120W) within the predetermined time is greater than N, the controller 106 controls the first inverter 102 and the second inverter 104 to output the total output power of the solar inverter system 200 simultaneously, and the first inverter 102 and the second inverter 104 output the maximum output power (120W) of the first inverter 102 in turn. Therefore, when the output power of the first inverter 102 is the maximum output power (120W) of the first inverter 102, the output power of the second inverter 104 is the total output power of the solar inverter system 200 minus the maximum output power (120W) of the first inverter 102; and when the output power of the second inverter 104 is the maximum output power (120W) of the first inverter 102, the output power of the first inverter 102 is the total output power of the solar inverter system 200 minus the maximum output power (120W) of the first inverter 102. In addition, in another embodiment of the present invention, the solar inverter system 200 further includes the sensor 110. Further, subsequent operational principles of the solar inverter system 200 are the same as those of the solar inverter system 100, so further description thereof is omitted for simplicity.

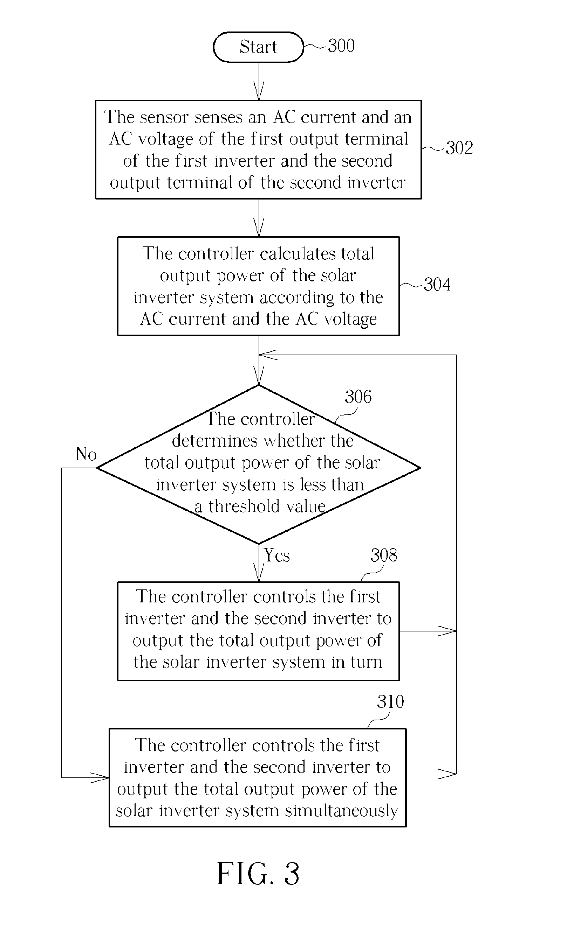

Please refer to FIG. 1, FIG. 2, and FIG. 3. FIG. 3 is a flowchart illustrating a control method of a solar inverter system according to another embodiment. The control method in FIG. 3 is illustrated using the solar inverter system 100 in FIG. 1. Detailed steps are as follows:
- Step 300:: Start.
- Step 302:: The sensor 110 senses an AC current IAC and an AC voltage VAC of the first output terminal of the first inverter 102 and the second output terminal of the second inverter 104.
- Step 304:: The controller 106 calculates total output power of the solar inverter system 100 according to the AC current IAC and the AC voltage VAC.
- Step 306:: The controller 106 determines whether the total output power of the solar inverter system 100 is less than a threshold value; if yes, go to Step 308; if no, go to Step 310.
- Step 308:: The controller 106 controls the first inverter 102 and the second inverter 104 to output the total output power of the solar inverter system 100 in turn; go to Step 306.
- Step 310:: The controller 106 controls the first inverter 102 and the second inverter 104 to output the total output power of the solar inverter system 100 simultaneously; go to Step 306.

In Step 306, the threshold value is the maximum output power of the first inverter 102. In Step 308, when the total output power of the solar inverter system 100 is less than the threshold value, the controller 106 controls the first inverter 102 and the second inverter 104 to output the total output power of the solar inverter system 100 in turn. For example, the maximum output power of the first inverter 102 is 120W. When the total output power of the solar inverter system 100 is 110W, because the total output power (110W) of the solar inverter system 100 is less than the threshold value (120W), the controller 106 controls the first inverter 102 and the second inverter 104 to output the total output power (110W) of the solar inverter system 100 in turn. In Step 310, when the total output power of the solar inverter system 100 is greater than threshold value (120W), the controller 106 controls the first inverter 102 and the second inverter 104 to output the total output power of the solar inverter system 100 simultaneously, and the first inverter 102 and the second inverter 104 output the maximum output power of the first inverter 102 in turn. When the output power of the first inverter 102 is the maximum output power of the first inverter 102, the output power of the second inverter 104 is the total output power of the solar inverter system 100 minus the maximum output power of the first inverter 102; when the output power of the second inverter 104 is the maximum output power of the first inverter 102, the output power of the first inverter 102 is the total output power of the solar inverter system 100 minus the maximum output power of the first inverter 102. For example, when the total output power of the solar inverter system 100 is 130W, because the total output power (130W) of the solar inverter system 100 is greater than the threshold value (120W), the controller 106 controls the first inverter 102 and the second inverter 104 to output the total output power (130W) of the solar inverter system 100 simultaneously. Therefore, when the output power of the first inverter 102 is the maximum output power (120W) of the first inverter 102, the output power of the second inverter 104 is the total output power (130W) of the solar inverter system 100 minus the maximum output power (120W) of the first inverter 102. Therefore, the output power of the second inverter 104 is 10W. When the output power of the second inverter 104 is the maximum output power (120W) of the first inverter 102, the output power of the first inverter 102 is the total output power (130W) of the solar inverter system 100 minus the maximum output power (120W) of the first inverter 102. Therefore, the output power of the first inverter 102 is 10W.

Further, in another embodiment of the present invention (as shown in FIG. 2), in Step 306, the controller 106 of the solar inverter system 200 determines whether number of the total output power of the solar inverter system 200 greater than the threshold value (120W) counted by the counter 1062 within the predetermined time is greater than N. When the number of the total output power of the solar inverter system 200 greater than the threshold value (120W) counted by the counter 1062 within the predetermined time is less than N, the controller 106 controls the first inverter 102 and the second inverter 104 to output the total output power of the solar inverter system 200 in turn; when the number of the total output power of the solar inverter system 200 greater than the threshold value (120W) counted by the counter 1062 within the predetermined time is greater than N, the controller 106 controls the first inverter 102 and the second inverter 104 to output the total output power of the solar inverter system 200 simultaneously, and the first inverter 102 and the second inverter 104 output the maximum output power of the first inverter 102 in turn (120W). Meanwhile, when the output power of the first inverter 102 is the maximum output power of the first inverter 102 (120W), the output power of the second inverter 104 is the total output power of the solar inverter system 200 minus the maximum output power of the first inverter 102 (120W); when the output power of the second inverter 104 is the maximum output power of the first inverter 102 (120W), the output power of the first inverter 102 is the total output power of the solar inverter system 200 minus the maximum output power of the first inverter 102 (120W).

To sum up, the solar inverter system and the control method thereof utilize the controller to calculate the total output power of the solar inverter system and to determine whether the total output power of the solar inverter system is less than the threshold value. Then, when the total output power of the solar inverter system is less than the threshold value, the controller controls the first inverter and the second inverter to output the total output power of the solar inverter system in turn; and when the total output power of the solar inverter system is greater than the threshold value, the controller controls the first inverter and the second inverter to output the total output power of the solar inverter system simultaneously, and the first inverter and the second inverter output the maximum output power of the first inverter in turn. Therefore, because efficiency and harmonic distortion of the solar inverter system are determined by an inverter outputting greater power, compared to the prior art, the solar inverter system provided by the present invention has better efficiency and lower harmonic distortion. In addition, because the first inverter and the second inverter output the maximum output power of the first inverter in turn when the total output power of the solar inverter system is greater than the threshold value, the solar inverter system provided by the present invention has longer service life.

## Claims

1. A control method of a solar inverter system (100, 200), the solar inverter system (100, 200) comprising a first inverter (102), a second inverter (104), and a controller (106), wherein the first inverter (102) and the second inverter (104) are parallel with a utility grid (112), and the controller (106) is used for optionally controlling the first inverter (102) and the second inverter (104) to output total output power in turn, or controlling the first inverter (102) and the second inverter (104) to output the total output power simultaneously, the control method **characterized by**:
calculating the total output power of the first inverter (102) and the second inverter (104);
determining whether the total output power is less than a threshold value; and
executing a corresponding operation according to a determination result.

2. The control method of claim 1, further **characterized in that** executing the corresponding operation according to the determination result is the controller (106) controlling the first inverter (102) and the second inverter (104) to output the total output power in turn when the total output power is less than the threshold value.

3. The control method of claim 1, further **characterized in that** executing the corresponding operation according to the determination result is the controller (106) controlling the first inverter (102) and the second inverter (104) to output the total output power simultaneously when the total output power is greater than the threshold value, wherein the first inverter (102) and the second inverter (104) output maximum output power of the first inverter (102) in turn.

4. The control method of claim 3, further **characterized in that** the controller (106) controlling the first inverter (102) and the second inverter (104) to output the total output power simultaneously, and the first inverter (102) and the second inverter (104) outputting the maximum output power of the first inverter (102) in turn is output power of the second inverter (104) being the total output power minus the maximum output power of the first inverter (102) when the first inverter (102) outputs the maximum output power of the first inverter (102).

5. The control method of claim 3, further **characterized in that** the controller (106) controlling the first inverter (102) and the second inverter (104) to output the total output power simultaneously, and the first inverter (102) and the second inverter (104) outputting the maximum output power of the first inverter (102) in turn is output power of the first inverter (102) being the total output power minus the maximum output power of the first inverter (102) when the second inverter (104) outputs the maximum output power of the first inverter (102).

6. The control method of claim 1, further **characterized in that** the first output terminal of the first inverter (102) and the second output terminal of the second inverter (104) are coupled to a sensor (110), wherein calculating the total output power of the first inverter (102) and the second inverter (104) comprises:
the sensor (110) sensing an alternating current (AC) current and an AC voltage of the first output terminal and the second output terminal; and
the controller (106) calculating the total output power according to the AC current and the AC voltage.

7. The control method of claim 1, further **characterized in that** the controller (106) comprises a counter (1062), wherein the controller (106) controlling the first inverter (102) and the second inverter (104) to output the total output power simultaneously when number of the total output power greater than the threshold value counted by the counter (1062) within a predetermined time is greater than N, and the first inverter (102) and the second inverter (104) output maximum output power of the first inverter (102) in turn, wherein output power of the second inverter (104) is the total output power minus the maximum output power of the first inverter (102) when the first inverter (102) outputs the maximum output power of the first inverter (102); and output power of the first inverter (102) is the total output power minus the maximum output power of the first inverter (102) when the second inverter (104) outputs the maximum output power of the first inverter (102), wherein N is a positive integer.

8. A solar inverter system (100, 200), comprising:
a first inverter (102) having a first input terminal and a first output terminal, wherein the first input terminal is coupled to a solar panel (108);
a second inverter (104) having a second input terminal and a second output terminal, wherein the second input terminal is coupled to the solar panel (108), and the first output terminal and the second output terminal are in parallel with a utility grid (112); and
a controller (106) coupled to the first inverter (102) and the second inverter (104), wherein the controller (106) is configured for optionally controlling the first inverter (102) and the second inverter (104) to output total output power in turn, or controlling the first inverter (102) and the second inverter (104) to output the total output power simultaneously.

9. The solar inverter system (100, 200) of claim 8, further **characterized in that** the controller (106) controls the first inverter (102) and the second inverter (104) to output the total output power in turn when the total output power is less than a threshold value.

10. The solar inverter system (100, 200) of claim 8, further **characterized in that** the controller (106) controls the first inverter (102) and the second inverter (104) to output the total output power simultaneously when the total output power is greater than a threshold value, wherein the first inverter (102) and the second inverter (104) output maximum output power of the first inverter (102) in turn.

11. The solar inverter system (100, 200) of claim 10, further **characterized in that** the controller (106) controlling the first inverter (102) and the second inverter (104) to output the total output power simultaneously, and the first inverter (102) and the second inverter (104) outputting the maximum output power of the first inverter (102) in turn is output power of the second inverter (104) being the total output power minus the maximum output power of the first inverter (102) when the first inverter (102) outputs the maximum output power of the first inverter (102).

12. The solar inverter system (100, 200) of claim 10, further **characterized in that** the controller (106) controlling the first inverter (102) and the second inverter (104) to output the total output power simultaneously, and the first inverter (102) and the second inverter (104) outputting the maximum output power of the first inverter (102) in turn is output power of the first inverter (102) being the total output power minus the maximum output power of the first inverter (102) when the second inverter (104) outputting the maximum output power of the first inverter (102).

13. The solar inverter system (100, 200) of claim 8, further **characterized in that** the first output terminal of the first inverter (102) and the second output terminal of the second inverter (104) are coupled to a sensor (110); and the sensor (110) is used for sensing an AC current and an AC voltage of the first output terminal and the second output terminal, and the controller (106) calculates the total output power according to the AC current and the AC voltage.

14. The solar inverter system (100, 200) of claim 8, further **characterized in that** the controller (106) comprises a counter (1062), wherein the controller (106) controls the first inverter (102) and the second inverter (104) to output the total output power simultaneously when number of the total output power greater than a threshold value is greater than N counted by the counter (1062) within a predetermined time, and the first inverter (102) and the second inverter (104) output maximum output power of the first inverter (102) in turn, wherein output power of the second inverter (104) is the total output power minus the maximum output power of the first inverter (102) when the first inverter (102) outputting the maximum output power of the first inverter (102); and output power of the first inverter (102) is the total output power minus the maximum output power of the first inverter (102) when the second inverter (104) outputting the maximum output power of the first inverter (102), wherein N is a positive integer.
